# EUROPEAN PATENT SPECIFICATION

(11) **EP 0 407 529 B1**
(45) Date of publication and mention of the grant of the patent: **25.01.1995**
(21) Application number: 90901351.8
(22) Date of filing: 08.12.1989
(51) Int. Cl.: G07F 7/10

(54) **KEYBOARD OPERATED SYSTEM**
TASTATURBEDIENTES SYSTEM
SYSTEME COMMANDE PAR CLAVIER

(30) Priority: 29.12.1988 FR 8817410
(43) Date of publication of application: 16.01.1991
(73) Proprietor: UNISYS CORPORATION, Blue Bell, PA 19424-0001 (US)
(72) Inventor: KERYHUEL, Alain, F-76760 Yerville (FR)
(74) Representative: Eisenführ, Speiser & Partner
(86) International application number: US8905568
(87) International publication number: WO9007756

(56) References cited:
- EP-A- 0 162 221
- EP-A- 0 174 016
- EP-A- 0 291 834
- WO-A-82/03484
- WO-A-83/03694
- WO-A-86/03040
- WO-A-86/03869
- FR-A- 2 634 300
- GB-A- 2 088 605
- US-A- 4 742 351
- PATENT ABSTRACTS OF JAPAN, vol. 10, no. 201 (E-419)(2257), 15 July 1986 ; & JP-A-61 43 050

## Description

The present invention relates to a system which comprises a user card including a keyboard and further comprises an apparatus controlled by the keyboard of the user card.

Such a system is generally known from e.g. WO-A-83/03694 which is considered the closest prior art from which the invention proceeds. This prior art relates to a funds transfer system comprising an apparatus, a removeable module having an integral keyboard, a recess for receiving and holding the module in association with the apparatus, and coupling means for transferring data between the module and the apparatus. The known system further comprises two optical coupling means wherein the one coupling means consists of an optical transmitter provided on the module and an optical receiver provided on the apparatus, and the other coupling means consists of an optical receiver provided on the module and an optical transmitter provided on the apparatus. These two coupling means are provided for establishing a bi-directional communication between the module and the apparatus.

From WO-86/03040 there is known a unitary, self-contained card verification and validation system wherein the unitary, self-contained card has the ability to verify a personal identification number (PIN) which is entered directly into the card by way of a keyboard without the use of an outside terminal and produce a transaction identification code which varies for each transactional use of the card and which can later be verified to determine the validity of the transaction.

GB-A-2088605 discloses an identification element in the form of an integrated circuit e.g. for identification cards and similar data carriers containing a confidentional code which is known only by the lawful owner of the card and is compared in the integrated circuit with a code fed in or keyed in by the user. To prevent unauthorized use of the card, an independent circuit isolated from the rest of the circuit is provided to detect the feeding-in of incorrect codes and then render the card inoperable for a certain period of time.

JP-A-61/43050 describes a portable dial and telephone set wherein the dial is constituted by an IC card incorporating a control section having a keyboard input section and a display section.

From US-A-4 742 351 there is known a further IC card system comprising an IC card terminal and an IC card provided with a keyboard. When the IC card is inserted in the IC card terminal the primary account number (PAN) data read out from the IC card is compared with decrypted PAN data for identification purposes. Then, the IC card is removed from the terminal. The PIN data input into the IC card are compared with PIN data prestored in the IC card. The results of the comparison are used to identify the validity of the IC card, the terminal and the card owner.

In practice, it has been found that there is always a risk of failure of the coupling means between the card and the terminal.

In order to eliminate the above-mentioned risk, in accordance with the present invention there is provided a system comprising an apparatus, a removeable card having an integral keyboard, means for receiving and holding said card in association with said apparatus primary coupling means for coupling said card to said apparatus and for transferring data between said card and said apparatus, and interface means for detecting operation of said keyboard, said keyboard on said card acting as the keyboard for controlling said apparatus, characterized by secondary coupling means, operative to recover data from said card in the event of failure of said primary coupling means, said secondary coupling means comprising a display provided on said card and an optical detector provided in said apparatus for monitoring the state of a portion of said display.

The invention provides that a card can communicate with the apparatus through the secondary coupling means by using an optical method whereby a display on the card is operated in sympathy with data to be read out and the attached apparatus employs an optical detector for detecting the modulation of the display of the card. Should the normal communication through the primary coupling means fail for any reason, data can still be recovered from the card through the secondary coupling means so that a proper restoration of those data to the user is ensured.

As previously mentioned, the system of WO-A-83/03694 comprises two optical coupling means. However, these two coupling means of the known system are necessary to establish the desired bi-directional communication, and thus correspond to the primary coupling means of the invention only.

Further advantageous embodiments of the invention are defined in the sub-claims.

In accordance with a further aspect of the invention there is used an automatic teller. The invention provides the minimum opportunity for vandalism on such a teller by presenting to the user only a simple slot. The invention provides the slot for receiving the card and also provides transport means for transporting the card to an operating position whereat the coupling means and the interface means are engaged by the card. At the operating position the keyboard on the card may be operated.

In order further to facilitate use of the teller, the present invention yet further provides that the transport means comprises a drawer which can be extended upon arrival of the card to the operating position to allow user access to the keyboard on the card when the card is in the operating position. Thus, all sensitive elements of the teller are maintained concealed and protected in the drawer until the card is in place in its operating position, itself providing protection to the sensitive elements at the operating position. Such sensitive elements include card contact sets, optical couplers and the like.

In order to effect a cashless transaction, the invention provides that the card includes a money memory. The money memory contains a representation of an amount of money held on the card and usable with the card. The automatic teller is operative to transfer money into the money memory on the card or to debit the money memory on the card for payment. In this manner a cash-free transaction is realised removing the possibility of money robbery from the teller.

In a further embodiment of the invention, the invention provides that the card comprises a validation memory for holding a personal identification number, the card being operative to execute its self-validation check by providing indication whether or not an entered number on the keyboard is identical to the personal identification number, and the card being operative to indicate to the teller or other apparatus whether or not the entered number is identical to the personal identification number, the teller (or other apparatus) responding to the commands from the card if, and only if, the number is indeed identical to the personal identification number. In this way, use of the apparatus is gained if, and only if, the presenter of the card is the true owner. Only the true owner is aware of the personal identification number stored on the card. Only the true owner may cause the card to self-validate. The data for self-validation is kept internal to the card. No data transfers across the boundary between the card and the teller (or other apparatus) so that attempts of fraudulent use of a card cannot succeed by examination of ingoing and outgoing data.

Indication to the teller (or other apparatus) that a card has self-validated can be made by provision by the card, to the teller, of a further card-identification number (similar to the user personal identification number) whereby the card itself is identified. The teller (or other apparatus) may then request a further personal identification number from the user which must cross-check with the card identification number. In this way, even if a fraudulent user succeeds in convincing the teller (or other apparatus) that a card has self-validated, the teller (or other apparatus) will refuse further to co-operate with the card. Lastly, the card itself will not function as a keyboard for the apparatus unless it has genuinely self-validated.

The invention provides that the teller (or other apparatus) will destroy access to the stored personal identification number on the card if a user attempts more than a predetermined number of personal identification number entries, none of which proves correct. In this way, a fraudulently used card has its function destroyed so that it is no longer usable. The teller (or other apparatus) then has the possibility of swallowing and retaining the card.

The invention provides that the card may self-validate when not on a teller (or other apparatus). In such instance, the card properly self-validated will display the default symbols in a display area, and a card improperly validated will display error symbols in the display area. A person, seeking a monetary transaction with a cardholder, may thus ascertain whether or not the person presenting the card is its true owner.

In order that the personal identification number on the card is not readily determined by trial and error, the invention includes provision whereby the card, in a self-validation check, not necessarily on a teller or other apparatus, should a personal identification number be wrongly entered more than a predetermined number of times, ceases all function for a set time (in an example chosen, five minutes) so that it would take an inordinate amount of time to try all personal identification numbers, the card not accepting a further identification number entry attempt until the lapse of the predetermined time.

The apparatus in the system can be a telephone and the keyboard on the card may be employable as the dialling keypad for the telephone. In this manner, a telephone is provided where a fresh keypad is presented by each user and where the telephone itself comprises no keypad. The telephone is thus proof against any keypad being vandalized.

The telephone will only respond to a card which has successfully self-validated. This way, access to the use of the telephone is restricted to the true owners of cards.

Where it is desired that the card user should pay for a call, as in a public telephone, the invention provides that the card includes a money memory containing a representation of a sum of money stored for use with the card, that the telephone is operative to monitor the dialled number and to determine the unit cost per unit time for the call placed, and that the telephone is operative to substract the unit cost from the representation in the money memory at each elapse of unit time during the call.

The apparatus is a transfer terminal where the card is a first card, where the transfer terminal is operative simultaneously to receive the second card, where the first card and the second card each comprise a respective money memory operative to store a numerical representation of money held, and where the transfer terminal is operative to substract the representation of a sum of money from the money memory in the first card and add a sum of money to the representation of the money memory in the second card. In this way, a transfer of funds can be effected between cards. The transfer terminal can be a point-of-sale terminal for use in a shop or other selling outlet. In order that a transaction can properly take place, it is provided that the teller terminal will respond to the cards if, and only if, both cards have properly self-validated. It is also provided that the transfer terminal or point-of-sale terminal will transfer money between the cards if, and only if, a sum of money entered on the keyboard of the first card agrees with a sum of money entered on the keyboard of the second card. In this way, only when the price is agreed, can the transfer of funds take place.

Moreover, all of the money held in the first card is tranferred to the second. In this way, at the end of a trading day, receipts in various point-of-sale terminals throughout a shop or store can be transferred to a master cashiers card for presentation and a deposition in a teller (such as provided in the first preferred embodiment). The system thereby provides for a totally moneyless trading system relying solely upon data stored on a card.

The invention is further explained, by way of an example, by the following description taken in conjunction with the appended drawings, in which:

FIG.1 shows a teller unit according to the first embodiment of the present invention and further shows the first stage in operation of the teller unit.

FIG.2 shows the teller unit of FIG.1 and shows a second stage in its operation.

FIG.3 shows a third stage in the operation of the teller unit of FIGS.1 and 2.

FIG.4 shows a fourth and last stage in the operation of the teller unit of FIGS.1,2 and 3.

FIG.5 shows a cross sectional view of the drawer unit of the teller units of FIG.1 to 4.

FIG.6 shows a plan view of the drawer unit of FIGS.1 to 5.

FIG.7 is a schematic block diagram of the component parts of a card.

FIG.8 is a schematic block diagram of the component parts of the teller unit.

FIG.9 is a front view of a card.

FIG.10 is a cross-sectional view of the card of FIG.9 taken along the line X-X′ looking in the direction of the arrows.

FIG.11 is an exemplary rear view of the card of FIGS.9 and 10.

FIG.12 is a flow chart of the operation of the teller.

FIG.13 is a flow chart of the operation of the card whilst on the teller.

FIG.14 is a flow chart of the operation of the card when not on the teller, and particularly exemplifies a self-validation check.

FIG.15 is a view of a transfer terminal or point-of-sale terminal according to another embodiment of the invention.

FIG.16 is a cross sectional view of the transfer terminal of FIG.15 taken along the line Y-Y′, looking in the direction of the arrows.

FIG.17 is a schematic block diagram of the point-of-sale terminal or transfer terminal of FIGS.15 and 16.

FIG.18 is a flow chart of the operation of the transfer terminal or point-of-sale terminal of FIGS.15 to 17 when operating to transfer funds to a master cashier card.

FIG.19 is a flow chart of the operation of the point-of-sale terminal of FIGS.15 to 17 when operating to transfer an agreed amount during a sale transaction.

FIG.20 shows a further embodiment of the invention, the apparatus being a telephone set.

FIG.21 shows the telephone set of FIG.20 with a card in place.

FIG.22 is a schematic block diagram of the card-interactive portions of the telephone set of FIGS.20 and 21.

FIG.23 is a flow chart of the operation of the telephone set of FIGS.20 and 21 during the course of use.

Whereas in the foregoing and the following description the invention has been limited to three examples, it is to be understood that the invention includes any system where a keyboard can be used and that these examples are merely illustrative of, and not restrictive upon, the invention as claimed.

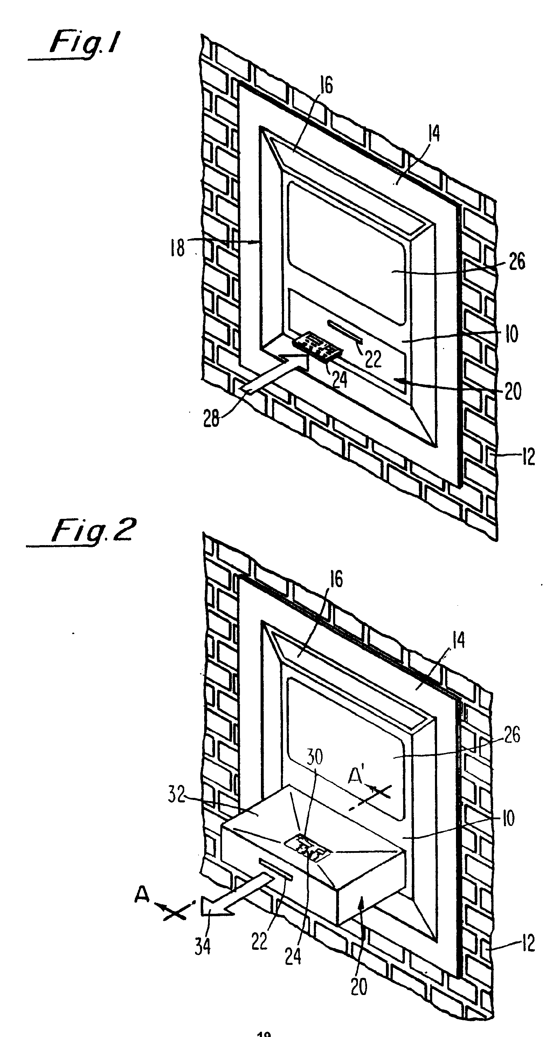

FIG.1 shows a first preferred embodiment of the invention in the form of a teller unit operated by a card.

A teller unit 10 is recessed on a publicly accessible wall 12 by means of a flange or escutcheon 14. The teller unit 10 comprises a light 16 on the top of its recessed portion 18 which, as will later be described, serves not only to provide light for visibility, but can also be employed to activate a presented card employing solar cells.

A drawer unit 20 is provided with a slot 22 where-through a card 24 can be introduced. The teller unit 10 also comprises a display panel 26 for use, as is known in the art, for displaying messages to be read by the user.

In a first action, the card 24 is introduced into the slot 22′ in a predetermined orientation, as indicated by a first arrow 28.

When the card 24 is introduced into the slot 22, it is transported into the teller unit 10, temporarily out of reach of the user.

FIG.2 shows the second stage of operation of the teller unit 10. When the card 24 has been transported into the drawer 20, it comes to rest in a central window 30 in the centre of a depressed upper face 32 of the drawer 20. The drawer 20 is then advanced by a motor (not shown) on runners (not shown), as indicated by a second arrow 34, to arrive at the open position shown whereat the card 24 is accessible to the user in the central window 30 but cannot be removed from the central window 30 by the user. The drawer 20 cannot be opened unless the correct type of card 24 has been inserted. Should an incorrect style of card 24 be presented in the slot 22, it is simply returned to the user through the slot 22 without the drawer 20 being opened.

With the drawer in the position shown in FIG.2, the user of the teller unit 10 is free to engage in transactions with the teller unit 10 using the card 24 (in a manner hereinafter described) by interacting with messages on the display panel 26 of the teller-unit 10.

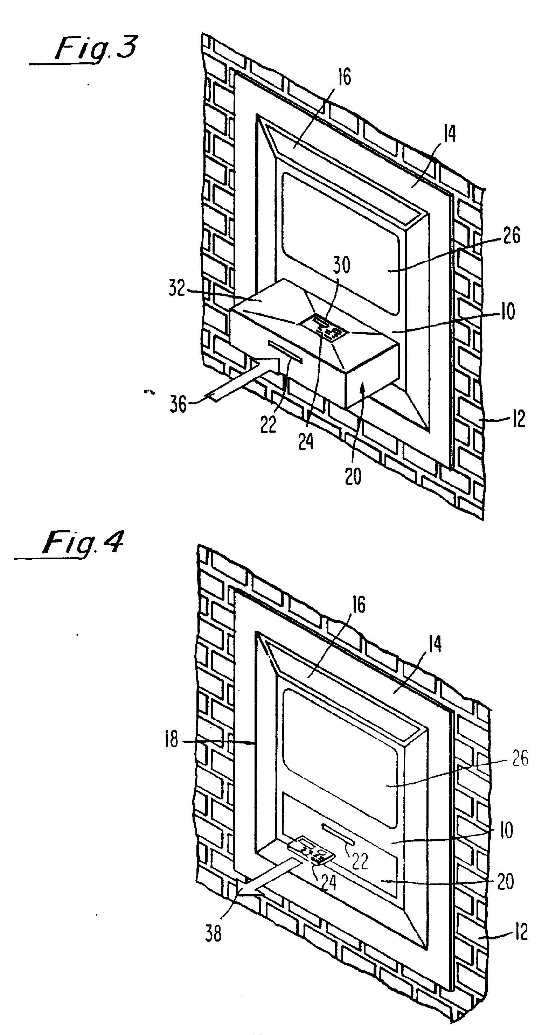

FIG.3 shows a third stage in the operation of the teller unit 10 executed at the end of a successful or unsuccessfully attempted transaction. The card 24 is retained in the central window 30 of the drawer unit 20 which is retracted back into the teller unit as indicated by a third arrow 36.

FIG.4 shows the final stage in operation of the teller unit 10 where the card 24 is returned to the user, as indicated by a fourth arrow 38, back through the slot 22. As will later be described, if the card 24 should prove in any way suspicious or defective, the teller unit 10 can retain the card rather than return it to the user.

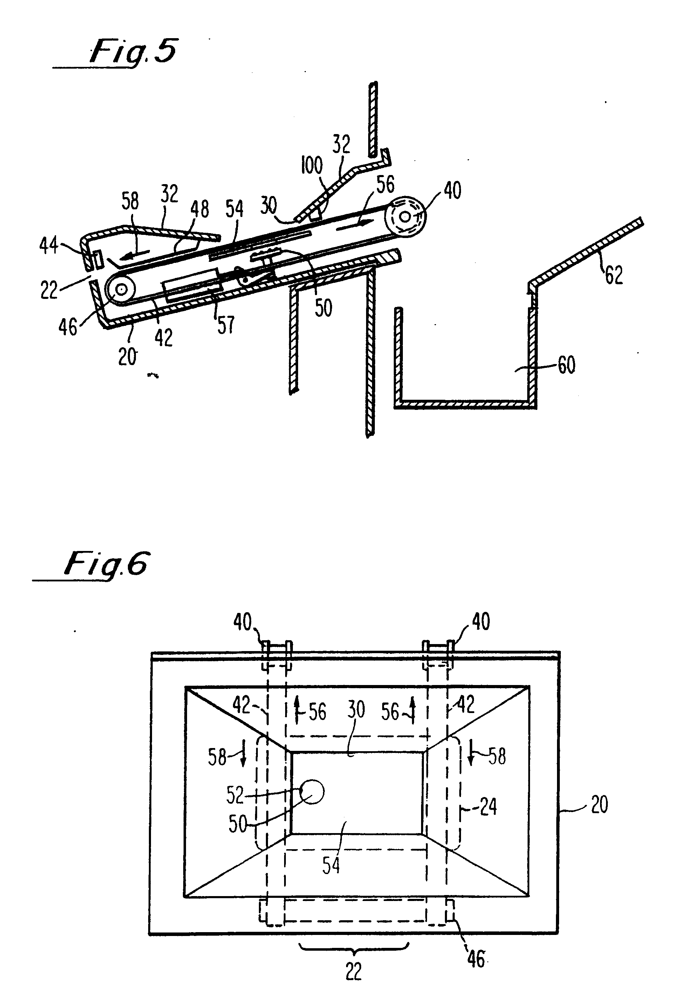

FIG.5 shows a cross sectional view through the teller unit 10, in the position shown in FIG.2, along the line A-A′ looking in the direction of the arrows.

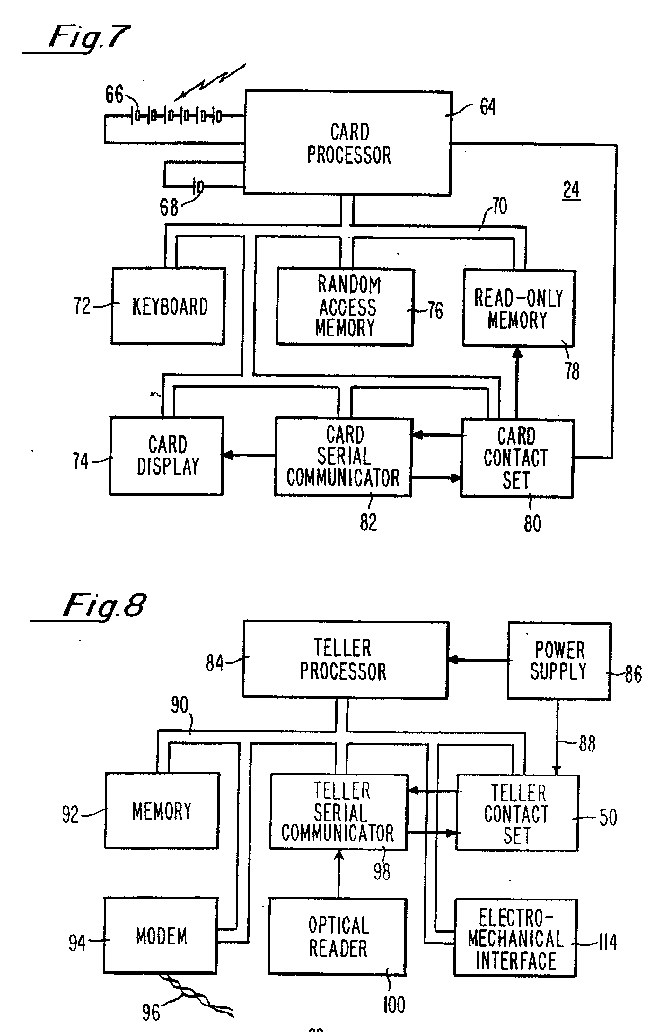

FIG.6 shows a plan view of the drawer unit 20 of FIG.2. For clarity, FIG.5 shows the drawer unit 20 with the card absent, and FIG.6 shows the drawer unit 20 with the card 24 shown only in phantom outline. It is to be understood that, whenever the drawer unit 20 is in the advance position shown in FIG.2, the card 24 which has been presented in fact occupies the central window 30.

A pair of rear rollers 40 are spaced apart a little less widely than the width of the card 24, each to support a respective transport belt 42 operative to conduct the card 24 into the drawer unit 20 through the slot 22. A photo detector 44 detects the insertion of the card 24. The transport belts 42 are supported at their ends nearest the slot 22 by means of a common roller 46. As soon as the photo detector 44 detects the insertion of a card 24, an electric motor drive (not shown) causes the transport belts 42 to induce the card 24, beneath a guide 48, into the drawer unit 20 to be situated as shown in FIG.6. The central window 30 is smaller in size than the overall dimension of the card 24. Because the card 24 is rigid and because the central window 30 is smaller than the card 24, the card 24 cannoc be removed from the drawer unit 20 as shown in FIG.6. As will later be described, all that is necessary is that a keyboard on the card 24 is accessible through the central window 30. Also, as will later be described, a teller contact set 50 provides electrical connection to the card 24. The teller contact set 50 is presented through an aperture 52 in a card support plate 54 by electro mechanical means 57 after the card 24 has arrived beneath the central window 30. Because of the arrangement of the rollers 40,46 it is only necessary to energize one roller 40,46 in order to achieve uniform induction of the card 24 into the drawer units 20.

In FIG.5, the mechanical means 57 for causing the teller contact set 50 to engage a card 24 is shown being raised by means of a solenoid and crank arm. When in this recovery mode, where the card contact set 80 has somehow failed to communicate serial data, the card serial communicator 82 is caused to strobe the selected element of the card display 74 at a speed consistent with the speed of response of a liquid crystal display. The serial data is thus slowly transferred from the card 24 to the teller unit 10. In this way, using a dedicated teller unit 10, a banking institution may recover data from a damaged card 24. Since a card 24 (as will hereinafter be described) represents a source of money, it is important to the card user to have this facility for recovering sums of money from his card should a fault occur. Not every teller unit 10 need be provided with an optical reader 100. Only those teller units where card recovery is contemplated need include an optical reader 100.

As an alternative, the card 24 itself may be provided with an optical reader 100 designed to interact with a modulated light source or source of reflection in the teller unit 10. In this way, two-way communication between a card 24 and a teller unit 10 can be achieved without direct electrical contact. Likewise, whereas the teller contact set 50 and the card contact set 80 are hereinafter and herein-before described as electrical contacts, it is to be understood that, where it is not necessary to transfer significant amounts of power to a card 24 during use, capacitive, inductive or other transfer modes can be implemented. Furthermore, it is to be understood that the contact set 50 can be raised or moved into position by any individually activable electro mechanical means known in the art.

In inducing the card 24 into the drawer unit 20, the transport belts 42 move as indicated by fifth arrows 56. On returning the card 24 to the user, as shown in FIG.4, the transport belts 42 move as indicated by sixth arrows 58. In the event of a card 24 not being returned to the user, the transport belts 42 are moved instead in the direction of the fifth arrows 56 for the card 24 to be deposited in a retention bin 60 wherefrom the owner of the teller unit 10 can retrieve a card 24 for restoration to its proper owner. The card 24 is ejected over the rear rollers 40 onto a guide chute 62 into the retention bin 60. As shown in FIG.5, the guide chute 62 allows a card 24 to enter the retention bin 60 with the drawer unit 20 in the retracted position of FIGS.1 and 4. Should it be desired to retain a card 24 with the drawer 20 in the advance position as shown in FIG.2, the retention bin 60 is so placed that, when the transport belts are moved as indicated by the fifth arrows 56, the card 24 is directly deposited into the retention bin 60 avoiding the guide chute 62. Such a situation may occur if the drawer unit 20 for some reason becomes jammed in the extended position shown in FIG.2. It is to be understood that this is an abnormal, fault condition not encountered during regular operation of the teller unit 10.

In regular operation of the teller unit 10, the aperture 52, the card support plate 54 and the teller contact set 50 are all concealed within the drawer unit 20 until a card 24 is located there-over. Only then is the drawer unit 20 advanced. Thus, the card 24 provides a protection for the more sensitive teller contact set 50, denying user access to the contact set 50 while the drawer 20 is in the advanced position. The drawer unit 20 is retracted before the card 24 is returned to the user. The sensitive elements 50 52 54 are thus once again concealed within the teller unit 10 before the card 24 is removed from its position there-over. The teller unit 10, when not in use, presents a clear surface having as its only feature the slot 22. The possibility of vandalism on the teller unit 10 is thereby minimized.

FIG.7 is a schematic block diagram of the card 24.

The card 24 is a so called 'smart card' comprising a low-powered card processor 64 providing, in effect, a miniature low power computer. The card processor 64 and all associated devices can be powered by means of a solar cell array 66, or can be powered by a replaceable or rechargeable power cell 68. A data and address bus 70 distributes signals (in a manner known to those skilled in the art) throughout various elements of the card 24. The card 24 comprises an integral keyboard 72 whose key strokes are transferred from the keyboard 72 via the data and address bus 70 to the card processor 64. Likewise, the card 24 comprises a card display 74, which can typically be a liquid crystal display, also driven via the data and address bus 70.

The card processor 64 also uses the data and address bus 70 to access a random access memory 76 and to access a read-only memory 78. A card contact set 80 communicates via the data and address bus 70 with the card processor 64 and provides electrical contact with a corresponding contact set in the teller unit 10. The card contact set 80 also provides electrical power to the card processor 64 (derived from the teller unit 10) when the card 24 is on the teller unit 10.

A card serial communicator 82 receives data from and transfers data to the card processor 64, via the data and address bus 70. The card serial communicator 82 turns parallel data from the card processor 64 into serial data for transmission via the card contact set 80. Similarly, the card serial communicator 82 turns serial data received from the card contact set 80 into parallel data for provision, on the data and address bus 70, to the card processor 64. In a manner later to be described, the card serial communicator 82 can also provide serial data to the card display 74 to modulate selected elements of the display for serial data optically to be read therefrom.

FIG.8 shows a schematic block diagram of the teller unit 10.

A teller processor 84, together with all other units in the teller unit 10, are powered by a teller power supply 86 derived from the electrical supply main or from a backup emergency battery source in the event of main failure. The teller power supply 86 provides electrical power, via power line 88, to the teller contact set 50, otherwise shown in FIGS.5 and 6. The teller processor 84 communicates with various elements in the teller 10 via a teller data and address bus 90. The teller processor 84 is, in effect, a small computer and uses the teller data and address bus 90 to communicate with a teller memory 92. The teller processor 84 uses the teller data and address bus 90 to provide two way communication with a modem 94 (i.e. a modulator/demodulator) employing a teller telephone line 96 to provide communication for the teller unit 10 with remote master banking computers whereby the teller unit 10 can confirm validity, invalidity, viability or nonviability of any transaction desired by the user and presenter of the card 24.

The teller processor 84 is connected, via the teller data and address bus 90, to a teller serial communicator 98, used for communicating between the teller unit 10 and the card 24. The teller contact set 50 mates with the card contact set 80. The teller serial communicator 98 is operative to receive parallel data from the teller processor 84 and convert it into serial data which is transferred through the teller contact set 50 to the card contact set 80 and thereafter to the card serial communicator 82 for presentation to the card processor 64. Likewise, parallel data from the card processor 64 is turned into serial data by the card serial communicator 82 and is transferred via the card contact set 80 to the teller contact set 50 and thereafter to the teller serial communicator 98 whereat it is once more turned into parallel data for presentation to the teller processor 84. In this manner, the teller unit 10 is able to communicate with the card 24. Should a failure have occurred in the teller contact set 50 for any reason, the card 24 may still communicate with the teller unit 10 using an optical reader 100 (also shown in FIG.5) interacting with the card display 74. The optical reader 100 provides serial data to the teller serial communicator 98 in response to modulation of the card display 74. The card serial communicator 82 flashes a selected element of the card display 74 in sympathy with serial data to be communicated to the teller unit 10. The optical reader 100 comprises a reflective photo detector (i.e. a light source and photo sensor for use where the card display is a liquid crystal display) which senses when the selected element of the card display 74 is in a transparent or darkened mode. The card processor 64, a card 24 and a teller unit 10.

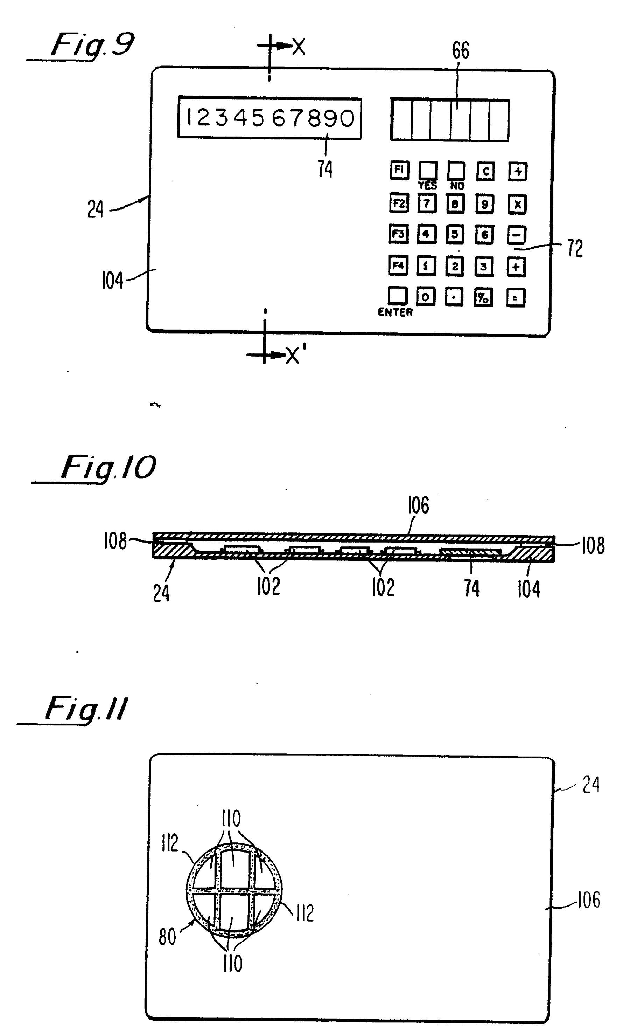

FIG.9 shows a front view of the card 24 whose schematic block diagram is shown in FIG.7. As previously stated, the card display 74 is a liquid crystal display and is here shown as a single-row seven-segment decimal digit display. It is to be understood that the card display 74 may comprise any other display suitable for use in the card 24.

The card 24 is itself of the general size and thickness of a normal credit card, being in the region of 8.5 centimetres long, 5.4 centimetres wide and between 1 and 3 millimetres thick. These dimensions are chosen purely for convenience and so that the card may be compatible with other credit card handling facilities. It is to be understood that, where the card 24 does not require to be compatible with other credit card handling facilities, major deviations from these dimensions can be made.

The solar cell array 66 is provided immediately above the keyboard 72 to one side of the card 24. When the card 24 is introduced beneath the light 16 of the teller unit 10, the solar cell array 66 powers the card 24. Should a power cell 68 be provided, the solar cell array 66 can be omitted. In those instances where the power cell 68 is rechargeable, power derived from the card contact set 80 via the teller contact set 50 can be used to recharge the power cell 68.

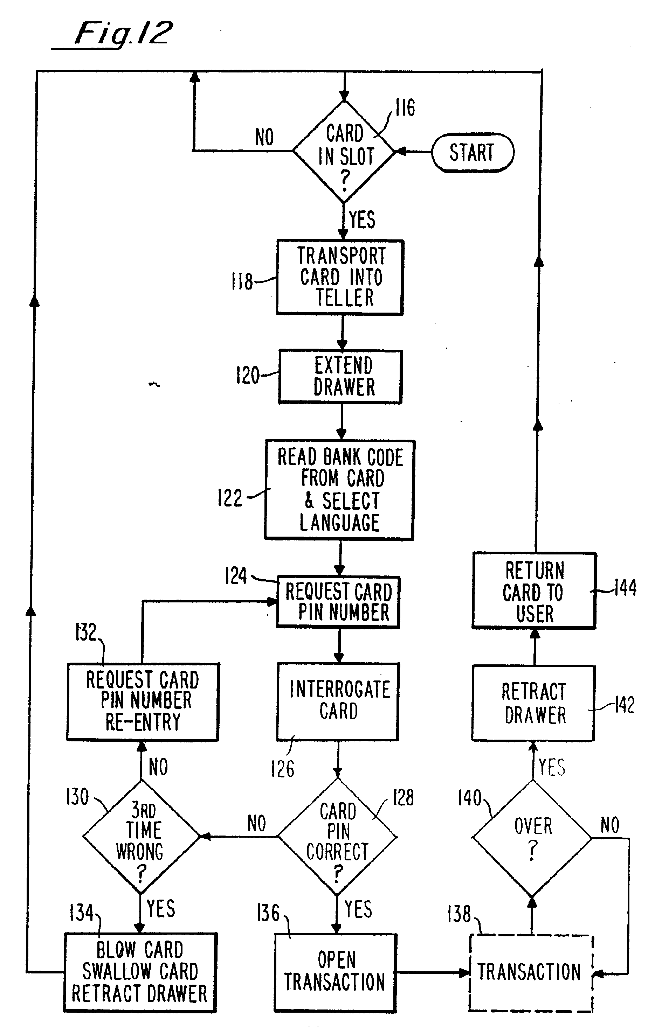

FIG.10 is a cross sectional view of the card 24 of FIG.9 taken along the line X-X′ looking in the direction of the arrows.

Individual surface mounted integrated circuits 102 making up the elements of the block diagram of FIG.7 are mounted in a cavity formed between a hollowed front member 104 and a rear member 106 of the card 24. The integrated circuits 102 are connected one with another using thin film printing techniques. The rear member 106 is attached to the front member 104 by means of adhesive 108 affixed between the raised edge of the front member 104 and the rear member 106. The keyboard 72 can be fabricated as a membrane keyboard, communicating with the integrated circuits 102 using thin film or flexible printed circuit board connection techniques.

FIG.11 shows a rear view of the card 24. The card contact set 80 comprises a number of conductive areas 110 set into an insulating surround 112 and protruding through the rear member 106. The card contact set 80 can comprise a small flange for supporting the rear member 106 (the flange not here being shown) and the contact set can in fact be affixed to the same face within the front member 104 as the integrated circuit 102.

When the card 24 is in the drawer unit 20, as shown in FIG.6, the card contact set 80 mates with corresponding electrodes in the teller contact set 50 when the electro mechanical means 57 advances the teller contact set 50 into engagement with the card contact set 80.

Returning briefly to FIG.8, the teller unit 10 further comprises an electro mechanical interface 114 of the type known to those skilled in the art whereby the teller processor 84 may individually command the electro mechanical means 57, may individually command electric motors causing the drawer unit 20 to advance and withdraw, and may individually command electric motors causing the transport belts 42 to be moved, each to perform selected mechanical functions. Likewise, the electro mechanical interface can receive the signals from the photo detector 44 to indicate the insertion of a card 24 through the slot 22. Such interfaces are generally achieved using selectively addressable memory locations, latch chips and selectively energizable transistors whose output is derived from the contents of the latches. Likewise, input data is fed to the teller processor 84 by the teller processor 84 addressing a selected memory location whereat a buffered latch exists. The contents of the buffered latch are determined by the condition of input signals and, when addressed, the selected memory location transfers its data to the teller processor 84 via the teller bus 90.

FIG.12 is a flow chart depicting the operation of the teller unit 10.

In a first operation 116, the teller unit 10 examines the output of the photo detector 44 to determine whether or not a card 24 has been inserted into the slot 22. The first test 116 continues to look for the presence of a card 24 in the slot 22 until a card 24 is detected. Control then passes to a first operation 118 wherein the teller processor 84 uses the mechanical interface 114 to ensure that the card 24 is transported through the slot 22 into the drawer unit 20 until it lies in the central window 30. This is achieved by the teller processor 84 commanding the electro mechanical interface 114 to operate a motor or motors to move the tranport belt 42 until the card 24 is in the central window 30. The teller processor 84 monitors the teller contact set 50 until it detects the card contact set 80 has engaged therewith. This is achieved by seeking a predetermined electrical resistance (i.e. conductivity but no short circuit) between a selected pair of terminals 110 in the teller contact set 50.

With the first operation 118 completed, control is passed to a second operation 120 where the drawer 20 is extended, again by the teller processor 84 issuing a command to the electro mechanical interface 114 for motors (not shown in the Figures) to extend the drawer unit 20 on runners (again not shown in the drawings) into the position shown in FIG.2.

With the drawer 20 extended, control passes from the second operation 120 to a third operation 122.

The card 24 may be issued by a bank in any one of a number of countries. Each country uses its own language and, in the case of countries like Japan, its own character set. It is appropriate that the teller unit 10 should respond to each card 24 in the appropriate language for the card user. To this end, each card 24 contains in the read-only memory 78, in a predetermined location, an indication of the bank or country wherein the card 24 was issued. This bank code is read from the card 24 by the teller 10 by means of the teller 10 issuing an instruction, via the teller serial communicator 98 and the teller contact set 50, to the card contact set 80 and the card serial communicator 82 to command the card processor 64 to examine the specific location. The card processor 64 examines all incoming information requests to determine whether a request has been made to access a part of the read-only memory 78 wherein the personal identification number of the card 24 is stored. Should the teller 10 desire to read that portion of the read-only memory 78 whereat the personal identification number of the card 24 is stored, the card processor 64 refuses to divulge that information. However, in the instance of the bank code, the teller 10 is able to extract the data for the read-only memory 78, and the teller unit 10 responds by selecting the appropriate language or set of symbols for use with its display panel 26.

Wherever cards 24 are issued, the codes identified by the cards 24 when received from outside or sent out by the cards 24 in response to external commands or keypad 72 operations, are the same. Every card 24 comprises numerical keys, question and answer keys and function keys on its keyboard 72. If a particular key is pressed, the same code is provided to the teller unit 10 regardless of the country of origin of the particular card 24. Thus, whereas in English there may be provided a 'yes' and a 'no' key, and whereas in French the keys might be numbered 'oui' and 'non', and in Japanese the same two keys may be depicted on the front of the card 24 with some other characters, the codes remain the same, and operation of corresponding keys results in corresponding codes. The teller unit 10 is thus required only to produce different pictographic codes for its display panel 26 for each message it is required to display.

The third operation 122 having been completed, control is passed to a fourth operation 124.

In the fourth operation, the teller unit 10 indicates on the display panel 26 in the appropriate language, a request that the user enter his card personal identification number. The teller unit 10 also issues a command to the card 24 to be ready to receive the card's personal identification number. The user then presses the keys in the keyboard 72 corresponding to the sequence of numbers or characters making up the card personal identification number. Control is then passed to a fifth operation 126 wherein the teller 10 interrogates the card 24 to determine whether or not the card personal identification number has been entered and, in a second test 128, checks to see whether the card 24 provides indication that the personal identification number is correct.

If the second test 128 detects that the card personal identification number is incorrect, control is passed to a third test 130 which checks if this is the third occasion of wrong entry of the card personal identification number. If the third test 130 does not detect a third occasion of wrong entry of the card personal identification number, control is passed to a sixth operation 132 wherein the teller unit 10 places a message upon its display panel 26 indicating that the card personal identification number should be re-entered. Control is then passed back to the fourth operation 124.

If the third test 130 detects that this is the third instance of the user having attempted incorrect entry of the card personal identification number, control is passed to a seventh operation 134 wherein the teller unit 10 commands the card to blow its personal identification number. This is simply achieved by the teller unit 10 writing a control word in the random access memory 76 whereby, when the card processor 64 comes to interrogate the read-only memory 78 at that location where the card personal identification number is stored, the card processor 74 is unable to do so because the command word written in the random access memory forbids access to that particular address. Thus, when the card 24 comes again to attempt a validation process, either on the teller unit 10 or in a self-validation process, it cannot access its personal identification number and therefore cannot test for validity. The card 24 is thus effectively neutralized in as much as the apparatus (in this instance, the teller unit 10) will not co-operate with the card unless it is validated by the card personal identification number corresponding to a number entered on the keyboard 72. The seventh operation 134 also provides that the teller processor 84, having commanded the card 24 to blow access to the personal identification number, then uses the electro mechanical interface 114 to command movement of the transport belts 42 to swallow the card by transferring it to the retention bin 60. The drawer unit 20 is simultaneously retracted and the suspected fraudulent user is deprived both of his card and of further access to the teller unit 10. The seventh operation 134 passes control back to the first test 116.

If the second test 128 detects that the sequence of numbers entered on the keyboard 72 of the card 24 is indeed the personal identification number of the card 24, control is passed to an eighth operation 136. The card 24 indicates success in matching the keyboard 72 entered sequence with the stored personal identification number in the read-only memory 78 by putting out a codeword to the teller 10 which is unique to the card 24. This, in effect, is a second personal identification number which the card 24 provides to the teller unit 10. The teller unit 10 opens the transaction by using the modem 94 to send an encrypted message via the teller telephone line 96 to the appropriate bank computer as indicated by the bank code, read from the card in the third operation 122. The teller unit 10 then requests the user to enter a further personal identification number by using the keyboard 72 of the card 24, and the teller unit 10 then compares the further personal identification number entered by the user with a personal identification number received via the teller telephone line 96 from the appropriate bank. If the further personal identification number matches, the teller processor 84 opens the transaction and allows control to pass to ninth operation 138 where the user transacts directly with his bank via the modem 94 and the teller telephone line 96 to transfer funds in and out of the random access memory 76 on his card 24.

The random access memory 76 on the card 24 is non-volatile. It contains a money memory wherein is stored a numerical indication of a sum of money held by the card 24. The card 24 may be used in the transaction 138 to transfer money into the appropriate bank, to receive money from the appropriate bank, or to exchange money from one currency type to another. To this end, the random access memory 76 on the card 24 is partitioned into various areas wherein are stored amounts in different currencies. Whenever it is desired to add money to the card 24, the card processor 64 merely adds the appropriate amount to the appropriate area in the random access memory 76. Whenever it is desired to use the card 24 to pay money, the card processor 64 merely deducts the appropriate amount from the appropriate area in the random access memory 76. When travelling abroad, it is merely necessary, when changing countries, to access any teller unit 10 to exchange currencies through the appropriate bank using the modem 94 and the teller telephone line 96. As will later become clear, the same card 24 can be used in shopping, bill paying and other money receiving situations.

A fourth test 140 checks to see whether the ninth operation 138 (a transaction) is finished. If the transaction 138 is finished, the fourth test 140 passes control to a tenth operation 142 wherein the teller processor 84 uses the electro mechanical interface 114 to retract the drawer unit 20 to the position shown in FIG.4. Thereafter control is passed to an eleventh operation 144 where the teller processor 84 again uses the electro mechanical interface 114 to cause the transport belts 42 to move to return the card 24 back through the slot 38 to the user. The eleventh operation 144 passes control directly back to the first test 116.

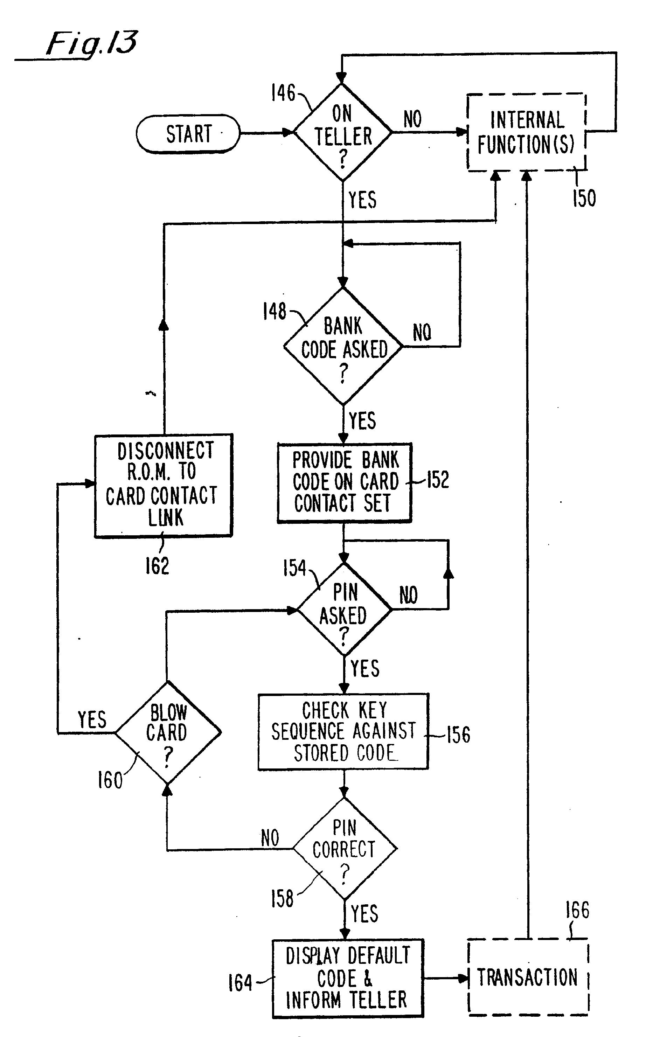

FIG.13 shows the function of the card 24 when placed in the teller unit 10. A fifth test 146 checks to see whether or not the card 24 is on the teller 10, as indicated in FIG.2. This is achieved by the card 24 looking for a particular predetermined codeword to be received from the teller 10. If that word is received, control is passed to a sixth test 148. If the particular codeword indicating presence on the teller 10 has not been received, control is passed back to a housekeeping operation 150 of internal functions wherein the card 24 can function in any other manner appropriate to it. As will be seen by examining FIG.9, the card is eminently suitable for use as a calculator or small memory device. The present invention provides that the card 24 can be used in such a function. Such functions are included in the housekeeping operation 150. At the termination of each part of the housekeeping function 150, control is passed back to the fifth test 146 to see whether or not the card 24 is on the teller 10.

Control having passed to the sixth test 148 on the fifth test 146 having detected receipt of the codeword indicating that the card 24 is on the teller unit 10, the sixth test 148 waits for the teller unit 10 to ask for the bank code of the card 24 (corresponding to the third operation 122 of FIG.12). As soon as the teller unit 10 requests the bank code, control is passed to a twelfth operation 152 which provides the bank code to the teller unit 10 in the form of serial data via the card contact set 80. The twelfth operation 152 then passes control to a seventh test 154 which checks to see whether the teller unit 10 has passed to the card 24 the particularly selected code which requests the card 24 to commence a validation operation by entry on the card keyboard 72 of the card personal identification number.

Upon the receipt of the command from the teller unit 10 to commence the validation operation, control is passed to a thirteenth operation 156 wherein the card 24 checks the sequence of digits pressed on its keyboard 72 against a sequence of digits stored in a predetermined location in the read-only memory 78. Control is then passed to an eighth test 158 which checks to see whether or not the keyed sequence on the keyboard 72 corresponded to the stored personal identification number on the card in the read-only memory 78. If the eighth 158 detects a lack of correspondence between the sequence of numerals or characters entered on the keyboard 72 and the stored personal identification number in the read-only memory 78, control is passed to a ninth test 160 which checks to see whether or not the teller unit 10 has issued the particular code commanding the card 24 to blow access to the number stored in the read-only memory 78 at the particular location whereat the personal identification number is stored. If the ninth test 160 does not detect a request from the teller unit 10 to blow access to the personal identification number, control is passed back to the seventh test 154, where the card 24 waits for a re-request for entry of the personal identification number on the keyboard 72. If the ninth test 160 does detect a request from the teller unit 10 to blow access to the personal identification number, control is passed to a fourteenth operation 162 which performs the actual blowing. As previously stated, it is preferred in the present invention that the denial of access to the read-only memory location (or locations) whereat the personal identification number (or numbers) are stored is achieved by writing an interdictory control word in the random access memory 76. Alternative techniques exist, such as applying a voltage level on one of the conductive areas 110 of the card contact set 80 such that a fusible link in the card 24 is blown, the fusible link, when blown, denying passage of enabling signals to the read-only memory 78.

The fourteenth operation 162 passes control directly to the housekeeping operation 150 which, in the fullness of time, returns control to the fifth test 146.

If the eighth test 158 discovers that the sequence of keystrokes on the keyboard 72 corresponds to the stored personal identification number in the read-only memory 78, control is passed to a fifteenth operation 164. In this fifteenth operation, the card processor 64 commands the card display 74 to display a row of default characters which indicate to the user that the personal identification number of the card 24 has been correctly entered. During keying of the code, no display is provided by the card 24 so that onlookers may not learn the card 24 personal identification number. The fifteenth operation 164 also informs the teller unit 10, via the card serial communicator 82 and the card contact set 80, that the card personal identification number has been correctly entered. As previously described, this is achieved by the card 24 passing to the teller unit 10 a further personal identification number which the teller unit 10 then communicates to the appropriate bank and compares against a yet further entered personal identification number by the user. In the invention, the number passed to the teller unit 10 as the personal identification number to be passed to the bank for receipt of the further personal identification number, is encrypted so that a fraudulent user may not readily discover its value. It is preferred that the encryption key be passed from the teller unit 10 to the card 24 on each occasion, and that the teller unit 10 changes the encryption key from time-to-time, so that the fraudulent user may not know in advance what code to provide.

The fifteenth operation 164 passes control to a transaction operation 166, corresponding to the transaction operation 138 of FIG.12. The transaction completed, the card 24 returns control to the housekeeping operation 150 which in turn, in the fullness of time, returns control to the fifth test 146.

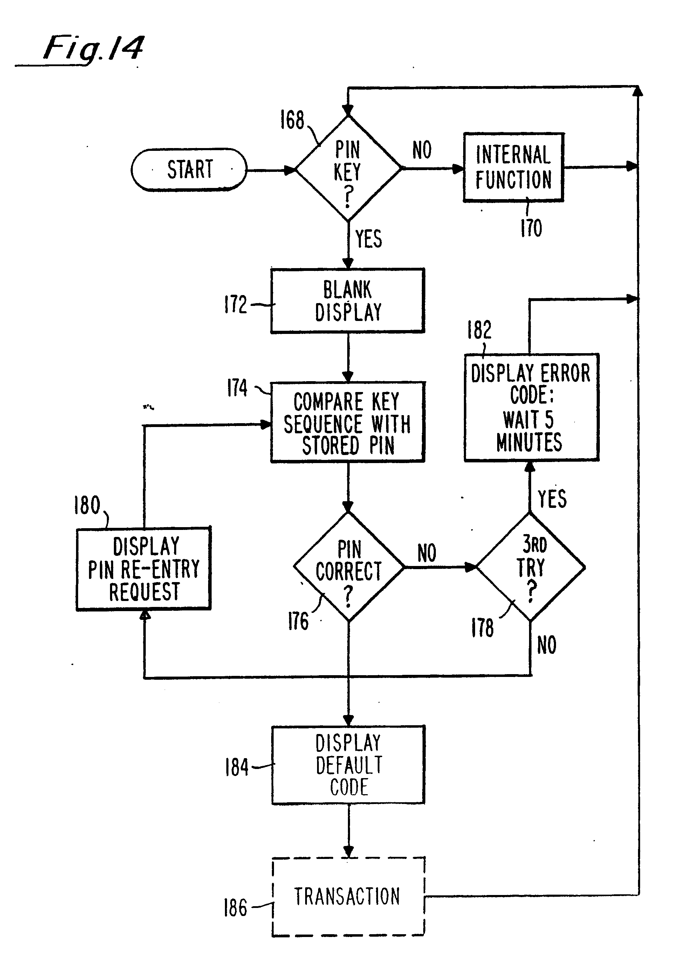

FIG.14 shows a self-validation process whereby the card 24 can check its own internally stored personal identification number to show that the user is indeed the true owner of the card.

One of the keys 72 on the card 24 is designated as the personal identification number key. When this particular key is pressed, the card 24 knows that it must execute a self-verification routine. A tenth test 168 checks to see whether the personal identification number key has been pressed. The tenth test 168 conveniently forms part of the housekeeping operation 150 of FIG.13. Should the personal identification number key not been pressed, the tenth test 168 passes control to a further housekeeping operation 170 forming the residue of the housekeeping operation 150 of FIG.13.

As soon as the personal identification number key 72 is pressed, the tenth test 168 passes control to a sixteenth operation 172 wherein the card processor 64 blanks the card display 74 so that no characters whatsoever are displayed while a sequence of keys on the keyboard 72 are pressed intended to correspond with the card personal identification number stored in the read-only memory 78. Casual onlookers cannot thereby learn the card personal identification number.

Control is passed by the sixteenth operation 172 to a seventeenth operation 174 which compares the sequence of digits or other characters entered on the keyboard 72 with the stored personal identification number in the read-only memory 78. The seventeenth operation 174 passes control to an eleventh test 176 to check whether the entered sequence of digits actually did correspond with the stored personal identification number. If there was no correspondence, the eleventh test 176 passes control to a twelfth test 178 which checks to see whether this is the third sequential unsuccessful instance of an attempt at entry of the personal identification number. If the twelfth test 178 does not find that it is the third abortive attempt to enter the personal identification number, it passes control to an eighteenth operation 180 which flashes a flag on the card display 74 requesting re-entry of the personal identification number. The eighteenth operation 180 then passes control to the seventeenth operation 174.

If the twelfth test 178 detects that this is indeed the third sequential abortive attempt to enter the personal identification number, the twelfth test 178 passes control to a nineteenth operation 182 where the card processor 64 causes an error message to be displayed on the card display 74 and also commences a five minute waiting process where no further operation will be accepted by the card. This five minute wait includes further attempts to enter the personal identification number. In this way, it is not possible repeatedly to attempt to identify the correct identification number by trial and error except at a very slow rate. Thus, the potential fraudulent user will be discouraged from attempting to find the personal identification number on a found or stolen card 24. Using a five decimal digit personal identification number and a five minute delay would require the fraudulent user to spend approximately 2,500 hours to find the correct personal identification number. If a keyboard including alpha numerics (i.e. 26 letters and 10 decimal digits, in total 36 characters) were included in the five digits, with the five minute delay, the period extends to a remarkable approximate five million hours. The delay can be chosen to be longer or shorter than five minutes and the number of different keys involved in the personal identification word can be varied. Whatever the choice, the introduced delay causes considerable difficulty in establishing the identity of the card personal identification number. Also, the displayed error message indicates to all those around that the person in control of the card is unaware of the correct personal identification number and may be a fraudulent user.

The nineteenth operation 182 passes control directly back to the tenth test 168.

If the eleventh test 176 indeed detects that the sequence of digits, entered on the keyboard 72, does correspond with the stored personal identification number in the read-only memory 78, control is passed to a twentieth operation 184 wherein the card processor 64 displays the default characters on the card display 74 indicating that the correct personal identification number has been entered. All those aware of the entry of the personal identification number can then be sure that the person operating the card 24 knows the correct personal identification number and that any transaction is likely to be valid and legal.

The twentieth operation 184 passes control to a twenty-first operation 186, generally indicative of any transaction that the card 24 will be used to complete. In the event of a simple request (for example, on the part of the police) to prove true ownership of the card, pressing another key on the keyboard 72 returns the twenty-first operation 186 directly. to the tenth test 168. In the event, as will hereinafter be described, of the card 24 being used in some form of sale, purchase or fund transfer, the card 24 awaits commands from the apparatus whereto it is connected prior to participating in the transaction.

No card 24 will participate in transactions unless it has been properly validated or self-validated as described with reference to FIGS.13 and 14. No card 24, not having been validated, will respond to commands from the associated apparatus as hereinbefore and hereinafter described except to commence a validation process as shown in FIG.13.

On completion of the twenty-first operation the card 24 returns control to the tenth test 168 and resumes its general housekeeping operations 170 150 until again called upon to execute some task.

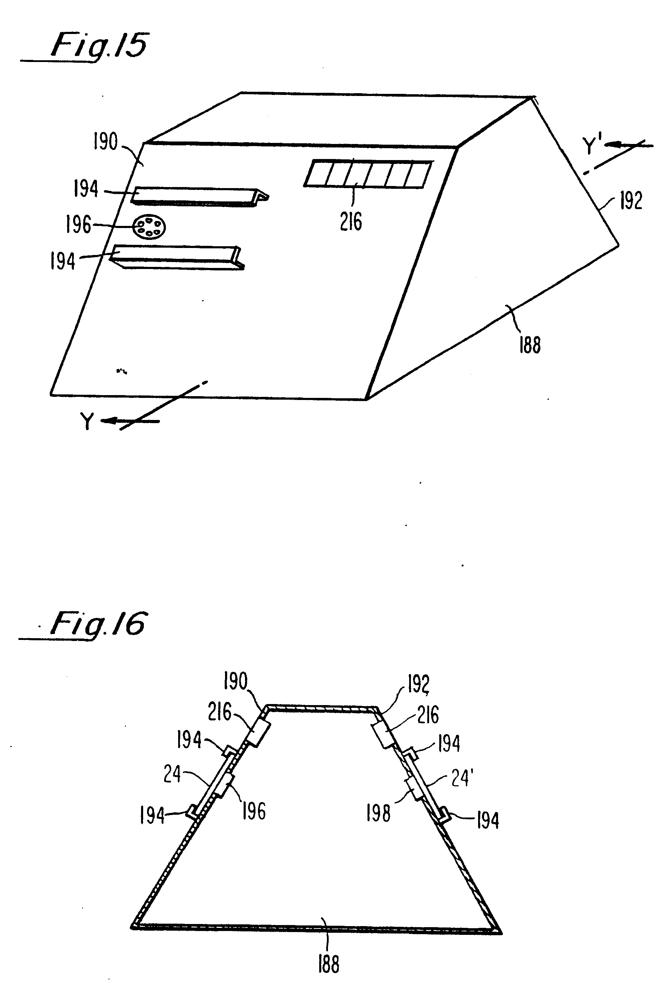

FIG.15 shows a projected view of a transfer terminal 188, aptly used as a point-of-sale terminal in a shop or other retail outlet. FIG.16 shows a cross sectional view of the transfer terminal of FIG.15 taken along the lines Y-Y′ looking in the direction of the arrows.

The transfer terminal 188 comprises a first face 190 and a second face 192. Each face comprises a pair of spaced support brackets 194 adapted to accept a card 24. Each support bracket set 194 is provided with a contact set 196,198. The first face 190 of the transfer terminal 188 is for use by the seller of goods. The second face 192 of the transfer terminal 188 is intended for use by the buyer of goods. The first face 190 of the transfer terminal 188 is provided with a seller contact set 196 intended to engage the card contact set 50 on the sellers card 24. In FIG.16 the buyer's card is designated as 24′. The second face 192 of transfer terminal 188 is provided with a buyer contact set 198 intended to make contact with the card contact set 80 of the buyer's card 24′. The transfer terminal 188 functions to transfer stored representations of money between the buyer's card 24′ and the seller's card 24.

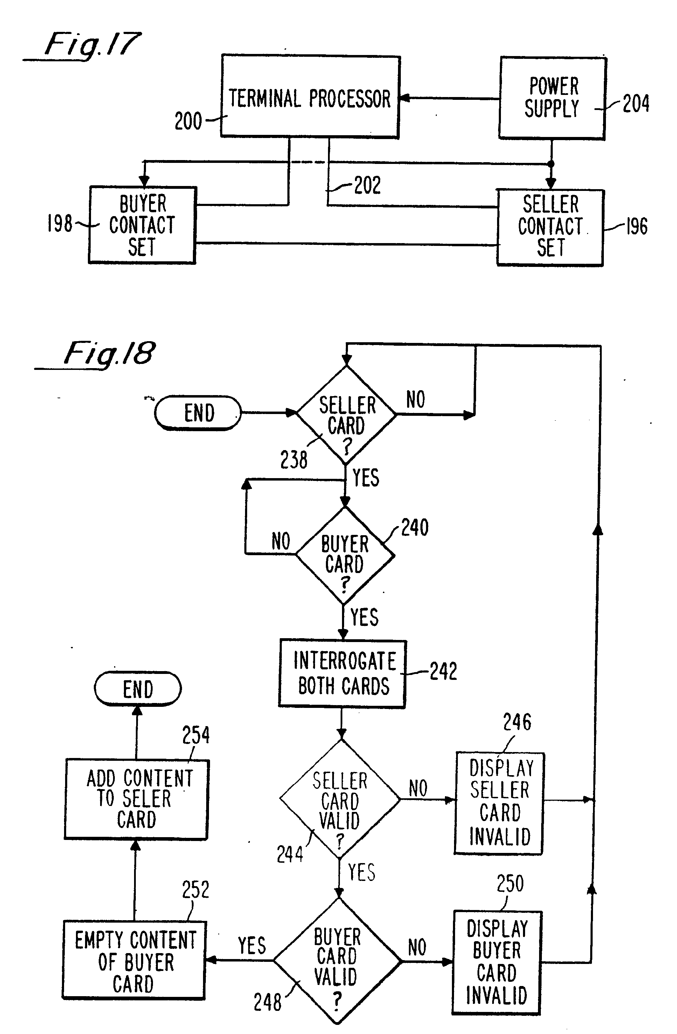

FIG.17 shows a schematic block diagram of the transfer terminal 188 of FIGS.15 and 16. A terminal processor 200 communicates by means of a terminal bus 202 both with the buyer contact set 198 and the seller contact set 196. A terminal power supply 204 provides electrical energy both to the buyer contact set 198 to energize the buyer's card 24′ and to the seller contact set 196 to provide energy to the seller's card 24.

FIG.19 is a flow chart of the operation of the transfer terminal 188 during a sale transaction.

In a thirteenth test 206 the teller terminal 188 interrogates the seller contact set 196 to see if a seller's card 24 is present. If a seller's card 24 is present on the seller contact set 196, control is transferred to a fourteenth test 208. If the thirteenth test 206 fails to detect the presence of a seller's card 24 on the seller contact set 196, the terminal processor 200 continues to wait.

The fourteenth test 208 examines the buyer contact set 198 to determine whether a buyer's card 24′ has been provided on the second face 192 of the transfer terminal 188. If no buyer's card 24′ has been detected, the terminal processor 200 continues to wait. If a buyer's card 24′ has been detected, control is passed to a twenty-second operation 210.

The twenty-second operation interrogates both cards 24,24′ to see whether or not the card 24,24′ has been self-validated. Each card 24,24′, when self-validated, and when thereafter interrogated by an apparatus, is operative to receive an encryption control word from the apparatus and to return a predetermined validation word to the apparatus, encrypted according to the encryption control word. Any of numerous encryption processes known in the art may be used, ranging from digit transposition to algorithmic processes involving algebraic identities. It is not important to the present invention exactly which encryption manner is selected, merely that the individual cards 24 24′ can receive, from the transfer terminal 188, a control word for controlling encryption and can return the predetermined validation word, encrypted in response to the control word to the apparatus.

In this instance, the transfer terminal 188 provides a selected (and from time to time variable) encryption control word to each card 24 24′ and each card 24,24′ responds by sending back the encrypted version of the self-validation indication word. Since the word to be returned varies from time to time, a fraudulent user will find it difficult to know the correct response to generate in order to operate a transfer terminal. Since the encryption command word can vary from transfer terminal to transfer terminal 188, a card, successfully fraudulently used on one transfer terminal 188 can not be used on another.

Having interrogated both cards 24 24′, the twenty-second operation 210 passes control to a fifteenth test 212 which checks to see whether or not the returned word (now decrypted), from the seller card 24 was the expected word indicating that the seller card 24 has properly self-validated. If the returned word is not the expected word indicating correct self-validation, the fifteenth test 212 passes control to a twenty-third operation 214.

The first face 190 and the second face 192 of the transfer terminal each comprise a terminal display 216 whereby the transfer terminal 188 provides messages to the users on either side. The twenty-third operation 214 causes the transfer terminal 188 to display to the seller and to the buyer that the seller's card 24 is invalid in as much as it has not properly self-validated. The twenty-third operation 214 then returns control to the thirteenth test 206.

If the fifteenth test 212 shows that the seller's card has been properly self-validated, control is passed to a sixteenth test 218 which performs exactly the same check concerning the self-validation of the buyer's card. If the sixteenth test 218 detects that the decrypted, returned codeword from the buyer's card 24′ is not the expected word, control is passed to a twenty-fourth operation 220 whereby the transfer terminal 188 uses the terminal displays 216 to indicate to the buyer and to the seller that the buyer's card 24′ has not been properly self-validated. The sixteenth test 220 then returns control to the thirteenth test 206.

If the sixteenth test 218 finds that the buyer's card 24′ has been properly self-validated, control is passed directly to a twenty-fifth operation 222 where the terminal processor 200 causes the terminal displays 216 to request the buyer and the seller to enter the amount of the proposed transaction. At this stage, the buyer and the seller must then use the keyboard 72 of their respective cards 24 24′ to enter the amount of the proposed transaction so that both may agree upon the amount.

The twenty-fifth operation 222 passes control to a twenty-sixth operation 224 wherein the transfer terminal 188 interrogates both cards 24 24′ to learn the amount which has been entered on the keyboard 72 in each case. The twenty-sixth operation 224 passes control to a seventeenth test 226.

The seventeenth test 226 checks to see whether the entered amounts on each of the cards 24 24′ are equal. If the seventeenth test 226 finds that the entered amounts are unequal, control is passed to a twenty-seventh operation 228 wherein the terminal processor 200 causes the terminal displays 216 to request both the buyer and seller to re-enter the proposed amount because the amounts in each case were not equal. The twenty-seventh operation 228 passes control back to the twenty-fifth operation 222.

If the seventeenth test 226 finds that the amounts entered on the keyboards. 72 of the buyer's 24′ and the seller's 24 cards are equal, it passes control to a twenty-eighth operation 230.

In the twenty-eighth operation 230, the terminal processor 200 commands the card processor 64 in the buyer card 24′ to access the random access memory 76, to retrieve from the random access memory 76 (that is, the money memory) the amount of money stored therein in the appropriate currency, and to cause the amount of the proposed transaction to be subtracted from the amount in the random access memory 76. Thereafter the debited amount in the random access memory 76 is once again stored in the random access memory 76 in place of the previous, larger amount.

The twenty-eighth operation 230 passes control to an eighteenth test 232 to see if a negative residue is left in the random access memory 76 of the buyer's card 24′. If the eighteenth test 232 detects such a negative residue, control is passed to a twenty-ninth operation 234 wherein the terminal processor 200 commands the card processor 64 to add the proposed amount back on to the contents of the random access memory 76, so to restore the amount which was to have been charged but which cannot now be charged due to insufficiency of funds. The terminal processor 200 then causes the displays 216 to inform both the seller and the buyer that there are insufficient funds present on the buyer's card 24′ for the transaction to proceed. The operation of the terminal processor 200 ends after completion of the twenty-ninth operation.

If the eighteenth test 232 discovers that the residue, remaining in the random access memory 76 of the buyer's card 24′, is not negative, that is to say, that there are sufficient funds present to complete the proposed transaction, the eighteenth test 232 passes control to a thirtieth operation 236 where the terminal processor 200 commands the seller card 24 to add the amount of the proposed transaction to the amount stored in its respective random access memory 76. After completion of the- thirtieth operation 236, the activity of the terminal processor 200 terminates.

Thus, by use of the two cards 24,24′ and terminal processor 188, it is possible to transfer money from one card 24′ to another 24. This may be done in the course of a sale or other transaction, but equally, it is possible simply just to transfer funds as in lending or giving. In particular, a simplified and size reduced version of the transfer terminal 188 can be provided just for such purposes.

Where the transfer terminal 188 is used as a point-of-sale terminal, the considerable advantage accrues that each sales person, issued with their own sellers card 24, can accrue, can be held accountable for and be responsible for their own particular sales. Further, with no actual money present, the risk of theft of money is reduced.

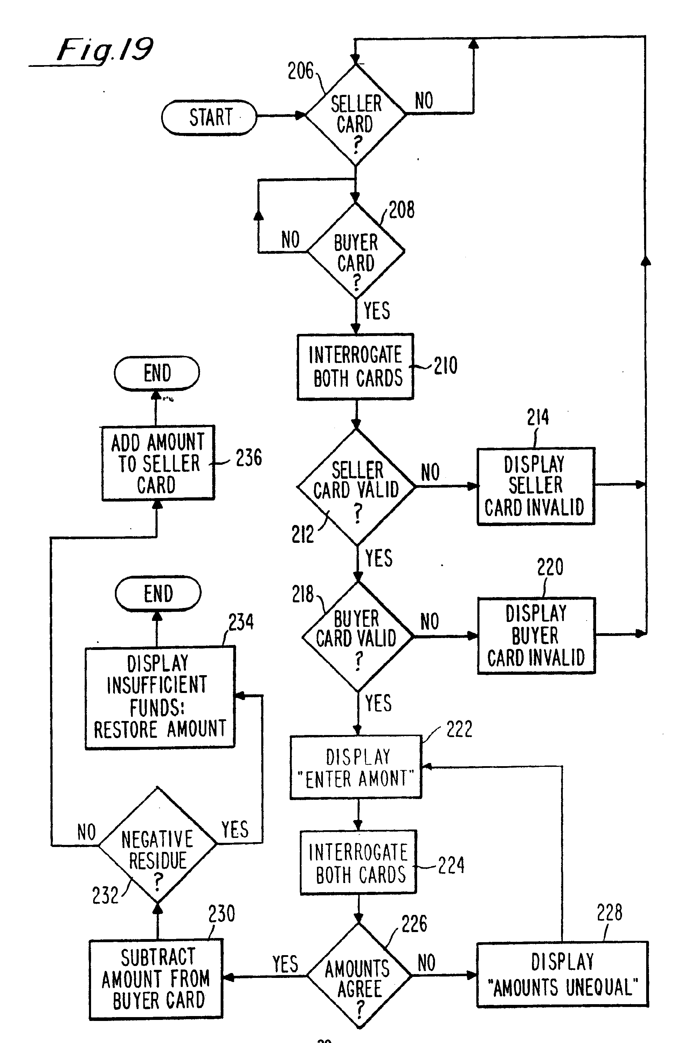

At the end of a trading day, each seller will have a considerable amount of money stored in the random access memory 76 of his or her card. It then becomes necessary to transfer those funds into a bank or at least, to another keeper. To achieve such a purpose, the transfer terminal 188 is simply used to transfer funds from the seller's card 24 to a master cashier's card. FIG.18 shows the behaviour of the transfer terminal 188 when used in this mode. The seller's card 24 is placed, this time, on the second face 192 of the transfer terminal 188 and the master cashier's card on the first face 190 of the transfer terminal. The previous seller's card 24 thus takes the place of any previous buyers' cards 24′ and the master cashier's card takes the place of the former seller's card 24. The teller processor 200 firstly executes a nineteenth test 238 corresponding to the thirteenth test 206 of FIG.19 whereby it is checked that the card 24 on the seller's side 190 (in this instance, the master cashier's card) is present. Control is then passed to a twentieth test 240, corresponding to the fourteenth test 208 of FIG.19, where the terminal processor 200 checks to see whether a card is present in the 'buyer' slot on the second face 192 of the teller terminal, in this instance the 'buyer' card being that card previously used in the 'seller' position on the first face 190 of the transfer terminal 188 during trading.

When both cards 24 are present, the twentieth test 240 passes control to a thirty-first operation 242, corresponding to the twenty-second operation 210 of FIG.19, where the terminal processor 200 interrogates the previous seller's card 24 and the master cashier's card 24 to see if both have been properly self-validated by transfer of an encrypted validation indication word to the transfer terminal 188. Control is then passed by the thirty-first operation 242 to a twenty-first test 244 which checks to see if the now decrypted word, received from the master cashier's card, is correct. If the decrypted validation indicating word from the master cashier's card is not correct, control is passed to a thirty-second operation 246 where the terminal processor 200 causes the displays 216 to show to both parties in the transaction that the validation of the master cashier's has not been properly carried out.

Should the twenty-first test 244 indicate that the master cashier's card (in the seller position on the first face 190) has been properly validated, control is passed to a twenty-second test 248 where the terminal processor 200 checks to see that the validation indicating word, received from the card on the second face 192 of the transfer terminal 188, is correct, this indicates that the previous sellers card has been properly validated. If the twenty-second test 248 finds that the card on the second face 192 of the transfer terminal 188 has not been properly validated, control is passed to a thirty-third operation 250. If the twenty-second test 248 finds that the card on the second face 192 of the transfer terminal 188 is also valid, control is passed to a thirty-fourth operation 252 wherein the entire contents of the random access memory 76 in the card on the second face 192 of the transfer terminal 188, are transferred into a cache memory in the terminal processor 200. Control is then passed to a thirty-fifth operation 254.

In the thirty-fifth operation 254 the contents of the cache memory. in the terminal processor 200 are added to the contents of the random access memory 76 in the card on the first face 190 of the transfer terminal. In this manner the entire contents of the previous sellers's card are transferred to the master cashier's card.

When the master cashier's card has been used to receive funds from all of the previous sellers' cards 24 using the transfer terminal 188, and, as an option, all master cashier's cards have been emptied into a yet more senior cashier's card, the card 24 bearing all of the funds so collected may then be taken to a terminal unit 10 as shown in FIGS.1,2,3, and 4 and the accumulated funds transferred directly into a bank for safekeeping. This way a money-less method of conducting business is achieved. Money can also be transferred from card to card as required, by the teller unit 10.

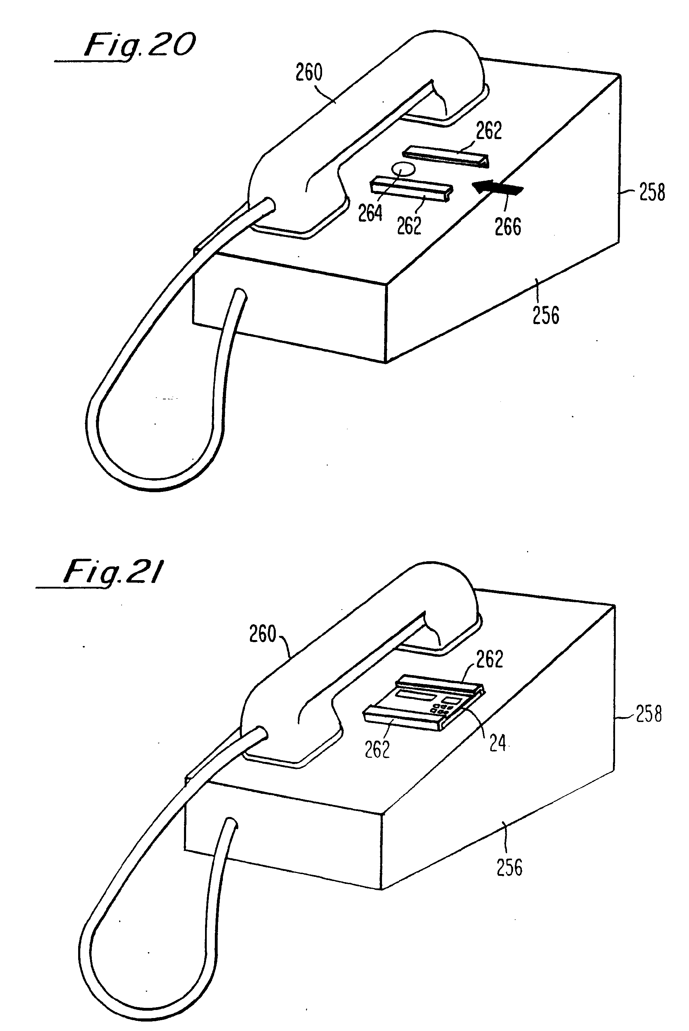

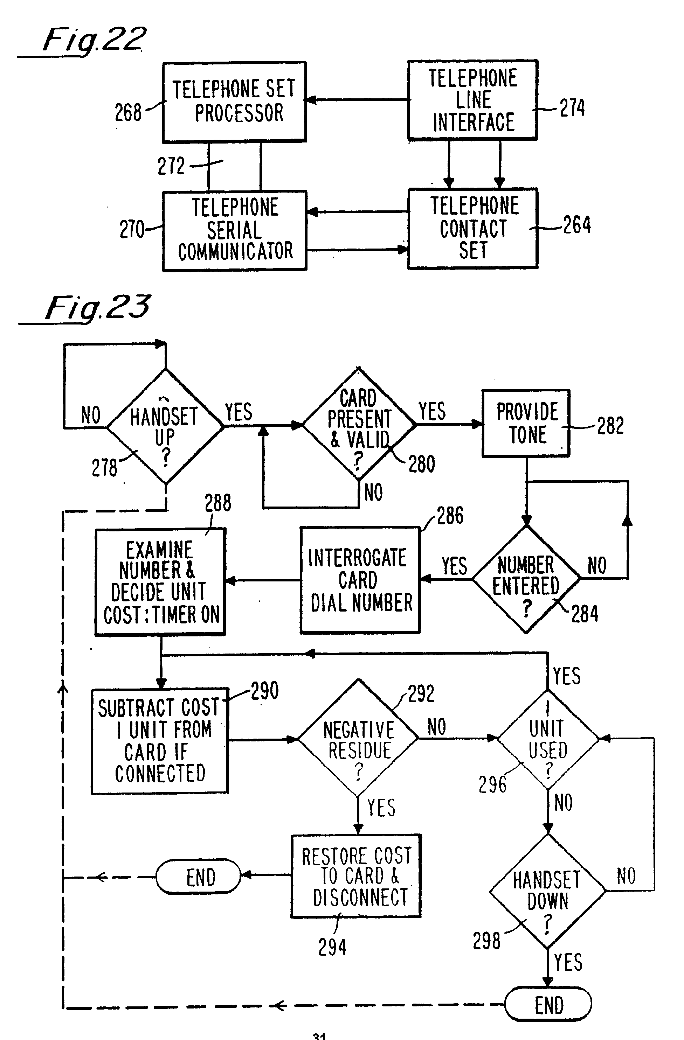

FIGS.20 and 21 show a yet further embodiment of the present invention in the form of a card-operated telephone system. A telephone set 256 comprises a base unit 258 and a handset 260. The base unit comprises a pair of support brackets 262 and a telephone contact set 264. When a card 24 is inserted between the support bracket 262 as indicated by a seventh arrow 266, it takes up the position shown in FIG.21 with the card contact set 80 engaging the telephone contact set 264 and the card 24 itself firmly held between the support brackets which also provide stops (not shown) to stop entry of the card 24 at the correct position.

By eliminating the presence of a keyboard on the base unit 258 of the telephone set 256, possibilities of vandalism of the telephone set are reduced.

FIG.22 shows a block diagram of the telephone set 256 of FIGS.20 and 21. A telephone set processor 268, being a normal micro processor device, communicates with a telephone serial communictor 270 by means of a telephone data and address bus 272. The telephone serial communicator 270 accepts parallel data words from the telephone set processor 268 and turns them into a stream of serial bits for provision via the telephone contact set 264 to the card 24. Likewise, the telephone serial communicator 270 receives serial bits or binary digits from the telephone contact set 264, derived from the card 24, and turns them into parallel data to be provided, on the telephone set data and address bus 272, to the telephone set processor 268.

A telephone line interface 274 derives electrical power and control signals from a telephone line 276. The electrical power is used to power the telephone set processor 268 and also to power the card 24 via the telephone contact set 264. Also, tones and other signals derived from the telephone line 276 can be passed to the card 24.

FIG.23 is a flow chart of the operation of the telephone set 256 during the course of a telephone call. In a twenty-third test 278, the telephone set processor 268 first checks to see whether or not the handset 260 has been lifted. If the handset 260 is still in its place on a cradle on the telephone set base 258, the telephone set processor 268 continues to wait until the handset 260 is lifted. If the twenty-third test 278 detects that the handset 260 has been lifted, control is passed to a twenty-fourth test 280. The twenty-fourth test 280 checks to see if the card 24 has been properly self-validated. As earlier described, this involves providing the card 24 with an encryption control word, receiving back from the card an indication of the state of self-validation encrypted according to the encryption control word, decrypting the indication received, back from the card and thereafter comparing the decrypted version of the response from the card with the expected response. If the presented card is indeed validated, control is passed to a thirty-sixth operation 282 wherein the tone from the telephone line 276 is passed to the earpiece of the handset 260 indicating that the telephone set 256 is available for use. If the twenty-fourth test 280 does not detect a properly validated card, it continues to seek the correct validation of a card and will not pass control to the thirty-sixth operation until a properly validated card 24 is presented.

The thirty-sixth operation 282 passes control to a twenty-fifth test 284 where the telephone set processor 268 waits for the card 24 to provide a codeword indicating that the telephone number which is to be dialled has been completely entered on the keyboard 72 of the card 24. At the same time, the display 74 on the card displays the number which is to be dialled for the information of the user. When the twenty-fifth test 284 detects that the complete number has been entered, control is passed to a thirty-seventh operation 286 where the telephone set processor 268 uses its telephone serial communicator 270 and telephone contact set 264 to interrogate the card 24 and derive therefrom the telephone number which is to be dialled. The thirty-seventh operation 286 then commences to dial the number via telephone line interface 274.

The thirty-seventh operation 286 passes control to a thirty-eighth operation 288 wherein the telephone set processor 268 examines the number which has been dialled and, by examination of the dialling codes used, decides the cost per unit time of the call. At this moment the timer for the call is commenced, provided the connection has been made via the telephone line interface 274 to the other telephone (i.e. when the called telephone replies).

The thirty-eighth operation 288 passes control to a thirty-ninth operation 290 which proceeds to subtract the cost of one call unit from the random access memory 76 in the card 24. The thirty-ninth operation 290 passes control to a twenty-sixth test 292 which tests to see whether the amount of money remaining stored in the random access memory 76 of the card 24 is in fact negative. If the amount remaining in the random access memory 76 has become negative, the twenty-sixth test 292 passes control to a fortieth operation 294 which causes the cost of a unit of time to be added once more to the contents of the random access memory 76 of the card 24 to restore the amount. Thereafter the activitiy of the telephone set processor ceases, the telephone line being 'hung-up' and the call terminated.

If the twenty-sixth test 292 discovers that there is sufficient money in the random access memory 76 of the card 24, control is passed to a twenty-seventh test 296 which waits to see if a unit of time has been used up. If the twenty-seventh test 296 detects that the unit of time has been used up, the control is transferred back to the thirty-ninth operation 290. Otherwise, the twenty-seventh test 296 transfers control to a twenty-eighth test 298 which checks to see if the handset 260 has once again been replaced. If the handset 260 has been replaced on the base unit 258, the call terminates, the telephone set processor 268 hangs up and all is over. If the handset 260 has not been replaced, the twenty-eighth 298 passes control back to the twenty-seventh test 296 waiting to charge for a further unit of time.

While the present invention has been described in three embodiments wherein a keyboard is used in association with apparatus requiring financial transaction for its operation, it is to be understood that the invention can equally be used in any apparatus requiring use of a keyboard. The financial aspect is enhanced by virtue of the fact that no actual money is present. The presence of the removable keyboard and of financial capability without presence of money in any apparatus is advantageous with regard to avoidance of vandalism and theft.

## Claims

1. A system comprising:
an apparatus (10);
a removeable card (24) having an integral keyboard (72);
means (20) for receiving and holding said card (24) in association with said apparatus (10);
primary coupling means (50, 80) for coupling said card (24) to said apparatus (10) and for transferring data between said card (24) and said apparatus (10); and
interface means (82, 98) for detecting operation of said keyboard (72);
said keyboard (72) on said card (24) acting as the keyboard for controlling said apparatus (10);
characterized by
secondary coupling means (74, 100), operative to recover data from said card (24) in the event of failure of said primary coupling means (50, 80), said secondary coupling means (74, 100) comprising a display (74) provided on said card (24) and an optical detector (100) provided in said apparatus (10) for monitoring the state of a portion of said display (74).

2. A system according to claim 1, wherein said secondary means (74, 100) comprise means to modulate said portion of said display (74).

3. A system according to claim 2, wherein said card (24) is operative to pass serial data to said apparatus (10) by modulating said portion of said display (74).

4. A system according to anyone of claims 1 to 3, wherein said card (24) comprises a money memory (76) for holding, in electronic form, representation of a sum of money, and wherein said secondary coupling means (74, 100) is operative to recover said representation of said sum of money.

5. A system according to anyone of claims 1 to 4, wherein said apparatus is an automatic teller (10).

6. A system according to claim 5, wherein said receiving and holding means (20) comprises a slot (22) for receiving said card (24), and transport means (40, 42, 46) for transporting said card (24) to an operating position whereat said coupling means (50, 80; 74, 100) become operative.

7. A system according to claim 6 wherein said receiving and holding means consists of a drawer (20) extendable upon arrival of said card (24) at said operating position, to allow user access to said keyboard (72) on said card (24).

8. A system according to anyone of claims 1 to 7, wherein said card (24) comprises a validation memory (78) for holding a personal identification number; wherein said card (24) is operative to execute a self-validation check by providing indication whether or not an entered number is identical to said personal identification number; and wherein said card (24) is operative to indicate to said apparatus (10) whether or not said entered number is identical to said personal identification number; said apparatus (10) responding to said card (24) only if said entered number is identical to said personal identification number.

9. A system according to claim 8, wherein said apparatus (10) is operative to render said card (24) no longer able to undergo a self-validation check if said apparatus (10) experiencies more than a first predetermined number of sequential instances of said entered number not being equal to said personal identification number.

10. A system according to claim 8 or claim 9, wherein said card (24), if said entered number is identical to said personal identification number, is operative to pass data to said apparatus (10), uniquely identifying said card (24).

11. A system according to claim 10, wherein said apparatus (10), having received said data, uniquely identifying said card (24), is operative to determine and request a further number further to be entered on said keyboard (72), and further to respond to said card (24) only if said further number agrees with said number further entered on said keyboard (72).

12. A system according to any of claims 8 to 11, wherein said card (24), when not coupled to said apparatus (10), should said entered number not equal said personal identification number in said self-validation check on more than a second predetermined number of sequential instances, is operative to wait for a predetermined period before again submitting to said self-validation check.

13. A system according to any of claims 8 to 12, wherein said card (24) comprises a display (72); wherein said card (24), in the event of said entered number being identical to said personal identification number, is operative to place a default symbol on said display (72); and wherein said card (24), in the event of said entered number not being identical to said personal identification number, is operative to place an error symbol on said display (72).

## Patentansprüche

1. System mit:
einem Gerät (10);
einer abnehmbaren Karte (24) mit eingebauter Tastatur (72);
Mittel (20) zum Entgegennehmen und Halten der Karte (24) in Verbindung mit dem Gerät (10);
ersten Verbindungsmitteln (50, 80) zum Verbinden der Karte (24) mit dem Gerät (10) und zur Datenübertragung zwischen der Karte (24) und dem Gerät (10); und
Schnittstelleneinrichtung (82, 98) zur Bedienungserkennung der Tastatur (72);
wobei die Tastatur (72) auf der Karte (24) als Tastatur zum Steuern des Gerätes (10) tätig ist;
gekennzeichnet durch
zweite Verbindungsmittel (74, 100), die in der Lage sind, Daten von der Karte (24) im Falle eines Fehlers der ersten Verbindungsmittel (50, 80) wiederzugewinnen, die zweiten Verbindungsmittel (74, 100) eine auf der Karte (24) ausgebildete Anzeige (74) und einen optischen Detektor (100) aufweisen, der in das Gerät (10) zur Überwachung des Zustandes eines Segments der Anzeige (74) ausgebildet ist.

2. System nach Anspruch 1, bei dem die zweiten Verbindungsmittel (74, 100) Mittel zum Ansteuern des Segments der Anzeige (74) enthalten.

3. System nach Anspruch 2, bei dem die Karte (24) in der Lage ist, serielle Daten zum Gerät (10) durch Ansteuern des Abschnittes der Anzeige (74) zu übermitteln.

4. System nach einem der Ansprüche 1 bis 3, bei dem die Karte (24) einen Geldspeicher (76) zum Speichern der Darstellung einer Geldsumme in elektronischer Form enthält und bei dem das zweite Verbindungsmittel (74, 100) in der Lage ist, die Darstellung der Geldsumme wiederherzustellen.

5. System nach einem der Ansprüche 1 bis 4, bei dem das Gerät ein automatischer Schalter (10) ist.

6. System nach Anspruch 5, bei dem die Entgegennahme- und Haltemittel (20) einen Schlitz (22) zur Entgegennahme der Karte (24) und Transportmittel (40, 42, 46) zum Transportieren der Karte (24) zur Betriebsposition aufweisen, worauf die Verbindungsmittel (50, 80; 74, 100) betriebsbereit werden.

7. System nach Anspruch 6, bei dem das Entgegennahme- und Haltemittel (20) einen auf den Eingang einer Karte (24) in Betriebsposition ausfahrbaren Einschub (20) enthält, um dem Benutzer Zugang zur Tastatur (72) der Karte (24) zu ermöglichen.

8. System nach einem der Ansprüche 1 bis 7, bei dem die Karte (24) einen Validationsspeicher (78) zum Speichern einer persönlichen Kenn-Nummer enthält;
bei dem die Karte (24) in der Lage ist, eine eigene Validationsüberprüfung durch Versehen eines Hinweises, ob eine eingegebene Nummer mit der persönlichen Kenn-Nummer identisch ist oder nicht, auszuführen; und bei dem die Karte (24) in der Lage ist, das Gerät (10) zu signalisieren, ob die eingegebene Nummer mit der persönlichen Kenn-Nummer identisch ist oder nicht; das Gerät (10) der Karte (24) nur dann antwortet, wenn die eingegebene Nummer mit der persönlichen Kenn-Nummer identisch ist.

9. System nach Anspruch 8, bei dem das Gerät (10) in der Lage ist, der Karte (24) nicht länger zu ermöglichen, sich einer Eigen-Validations-Überprüfung zu unterziehen, wenn das Gerät (10) erfährt, daß bei mehr als einer ersten vorbestimmten Anzahl von aufeinanderfolgenden Fällen die eingegebene Nummer nicht gleich ist mit der persönlichen Kenn-Nummer.

10. System nach Anspruch 8 oder 9, bei dem die Karte (24), wenn die eingegebene Nummer identisch ist mit der persönlichen Kenn-Nummer, in der Lage ist, ausschließlich die Karte (24) identifizierende Daten zum Gerät (10) zu übermitteln.

11. System nach Anspruch 10, bei dem das Gerät (10), die ausschließlich die Karte (24) identifizierenden Daten empfangen hat, in der Lage ist, eine weitere Nummer, die weiter auf der Tastatur (72) einzugeben ist, festzulegen und anzufordern und weiter der Karte (24) nur dann zu antworten, wenn die weitere Nummer mit der weiter auf der Tastatur (72) eingegebene Nummer übereinstimmt.

12. System nach einem der Ansprüche 8 bis 11, bei dem die Karte (24), wenn sie nicht mit dem Gerät (10) verbunden ist, in der Lageist, für eine vorbestimmte Dauer, bevor sie sich wieder eine Eigen-Validations-Überprüfung unterzieht, zu warten, falls die eingegebene Nummer nicht gleich der persönlichen Kenn-Nummer bei der Eigen-Validations-Überprüfung bei mehr als einer zweiten vorbestimmten Anzahl von folgenden Fällen ist.

13. System nach einem der Ansprüche 8 bis 12, bei der die Karte (24) eine Anzeige (72) enthält;
bei der die Karte (24) im Falle, daß die eingegebene Nummer identisch ist mit der persönlichen Kenn-Nummer, in der Lage ist, ein Standardsymbol auf der Anzeige (72) zu setzen und bei dem die Karte (24) im Falle, daß die eingegebene Nummer nicht mit der persönlichen Kenn-Nummer identisch ist, in der Lage ist, ein Fehlersymbol an der Anzeige (72) zu setzen.

## Revendications

1. Système comprenant :
un appareil (10) ;
une carte amovible (24) ayant un clavier intégré (72) ;
un moyen (20) pour recevoir et maintenir ladite carte (24), en l'associant audit appareil (10) ;
un moyen de connexion primaire (50, 80) pour connecter ladite carte (24) audit appareil (10) et pour transférer les données entre ladite carte (24) et ledit appareil (10) ; et
un moyen formant interface (82, 98) pour détecter la mise en oeuvre dudit clavier (72) ;
ledit clavier (72), sur ladite carte (24), agissant en tant que clavier pour commander ledit appareil (10) ;
caractérisé par
un moyen de connexion secondaire (74, 100), qui fonctionne pour retrouver les données provenant de ladite carte (24) dans l'éventualité d'une défaillance dudit moyen de connexion primaire (50, 80), ledit moyen de connexion secondaire (74, 100) comprenant un affichage (74) réalisé sur ladite carte (24) et un détecteur optique (100) réalisé dans ledit appareil (10) pour contrôler l'état d'une partie dudit affichage (74).

2. Système selon la revendication 1, dans lequel ledit moyen secondaire (74, 100) comprend un moyen pour moduler ladite partie dudit affichage (74).

3. Système selon la revendication 2, dans lequel ladite carte (24) sert à passer des données en série vers ledit appareil (10) en modulant ladite partie dudit affichage (74).

4. Système selon l'une quelconque des revendications 1 à 3, dans lequel ladite carte (24) comprend une mémoire d'argent (76) pour détenir, sous forme électronique, la représentation d'une somme d'argent, et dans lequel ledit moyen de connexion secondaire (74, 100) sert à retrouver ladite représentation de ladite somme d'argent.

5. Système selon l'une quelconque des revendications 1 à 4, dans lequel ledit appareil est un guichet automatique (10).

6. Système selon la revendication 5, dans lequel ledit moyen de réception et de maintien (20) comprend une fente (22) pour recevoir ladite carte (24), et un moyen de transport (40, 42, 46) pour transporter ladite carte (24) vers une position de fonctionnement au niveau de laquelle ledit moyen de connexion (50, 80 ; 74, 100) devient opérationnel.

7. Système selon la revendication 6, dans lequel ledit moyen de réception et de maintien est composé d'un tiroir (20) qui peut s'ouvrir lors de l'arrivée de ladite carte (24) à ladite position de fonctionnement, pour permettre à l'utilisateur d'accéder audit clavier (72) de ladite carte (24).

8. Système selon l'une quelconque des revendications 1 à 7, dans lequel ladite carte (24) comprend une mémoire de validation (78) pour détenir un numéro d'identification personnel ; dans lequel ladite carte (24) est opérationnelle pour exécuter une vérification d'autovalidation en fournissant une indication de savoir si le numéro entré est ou non identique audit numéro d'identification personnel ; et dans lequel ladite carte (24) est opérationnelle pour indiquer audit appareil (10) si le numéro entré est ou non identique audit numéro d'identification personnel ; ledit appareil (10) répondant à ladite carte (24) seulement si ledit numéro entré est identique audit numéro d'identification personnel.

9. Système selon la revendication 8, dans lequel ledit appareil (10) est opérationnel pour rendre ladite carte (24) incapable d'être soumise plus longtemps à une vérification d'autovalidation si ledit appareil (10) a fait l'expérience de plus d'un premier nombre prédéterminé d'essais consécutifs dudit numéro entré qui n'est pas égal audit numéro d'identification personnel.

10. Système selon la revendication 8 ou la revendication 9, dans lequel ladite carte (24), si ledit numéro entré est identique audit numéro d'identification personnel, est opérationnelle pour passer des données audit appareil (10), uniquement en identifiant ladite carte (24).

11. Système selon la revendication 10, dans lequel ledit appareil (10), ayant reçu lesdites données, uniquement en identifiant ladite carte (24), est opérationnel pour déterminer et demander un numéro supplémentaire à entrer à nouveau sur ledit clavier (72), et pour répondre davantage à ladite carte (24), seulement si ledit numéro supplémentaire concorde avec ledit numéro supplémentaire entré sur ledit clavier (72).

12. Système selon l'une quelconque des revendications 8 à 11, dans lequel ladite carte (24), lorsque non reliée audit appareil (10), pour peu que ledit numéro entré ne soit pas égal audit numéro d'identification personnel de ladite vérification d'autovalidation dans plus d'un second nombre prédéterminé d'essais consécutifs, est opérationnelle pour attendre un laps de temps prédéterminé avant d'être à nouveau soumise à ladite vérification d'autovalidation.

13. Système selon l'une quelconque des revendications 8 à 12, dans lequel ladite carte (24) comprend un afficheur (72) ; dans lequel ladite carte (24), dans l'éventualité où ledit numéro entré est identique audit numéro d'identification personnel, est opérationnelle pour mettre un symbole par défaut sur ledit afficheur (72) ; et dans lequel ladite carte (24), dans l'éventualité où ledit numéro entré n'est pas identique audit numéro d'identification personnel, est opérationnelle pour mettre un symbole d'erreur sur ledit afficheur (72).
